# EUROPÄISCHE PATENTANMELDUNG

(11) **EP 2 770 616 A1**
(43) Veröffentlichungstag der Anmeldung: **27.08.2014**
(21) Anmeldenummer: 13156576.4
(22) Anmeldetag: 25.02.2013
(51) Int. Cl.: H02K 19/24, H02K 16/04

(54) **Elektrische Maschine mit geteiltem Stator**

(71) Anmelder: Siemens Aktiengesellschaft, 80333 München (DE)
(72) Erfinder: Vollmer, Rolf, 36129 Gersfeld (DE)

(57) **Zusammenfassung**

Eine elektrische Maschine weist ein erstes Statorelement (1), ein zweites Statorelement (2) und einen mit einer Rotorwelle (4) verbundenen Rotor (3) auf. Die Rotorwelle (4) ist in Lagern (5) drehbar gelagert, so dass der Rotor (3) um eine Rotationsachse (6) rotierbar ist. Der Rotor (3) ist radial zur Rotationsachse (6) gesehen zwischen dem ersten und dem zweiten Statorelement (1, 2) angeordnet. Das erste Statorelement (1) trägt ein Statorwicklungssystem. Das zweite Statorelement (2) trägt eine Anzahl von Permanentmagneten (8). Die Permanentmagneten (8) generieren Magnetfelder (B), die um die Rotationsachse (6) herum gesehen alternierend auf den Rotor (3) zu und von dem Rotor (3) weg gerichtet sind. Der Rotor (3) weist eine Anzahl an weichmagnetischen Segmenten (11) auf, die tangential um die Rotationsachse (6) herum gesehen gleichmäßig verteilt sind und zwischen denen sich jeweils unmagnetische und elektrisch schlecht oder nicht leitende Bereiche (12) befinden.

## Beschreibung

Die vorliegende Erfindung betrifft eine elektrische Maschine,
- wobei die elektrische Maschine ein erstes Statorelement, ein zweites Statorelement und einen mit einer Rotorwelle verbundenen Rotor aufweist,
- wobei die Rotorwelle in Lagern drehbar gelagert ist, so dass der Rotor um eine Rotationsachse rotierbar ist,
- wobei der Rotor radial zur Rotationsachse gesehen zwischen dem ersten und dem zweiten Statorelement angeordnet ist,
- wobei das erste Statorelement ein Statorwicklungssystem trägt.

Eine derartige elektrische Maschine ist beispielsweise aus der EP 2 503 671 A1 bekannt. Bei dieser elektrischen Maschine sind auf dem zweiten Statorelement Magnetfeldgeneratoren angeordnet, deren Magnetfeld in den Rotor eingekoppelt wird.

Für mehrphasige - insbesondere dreiphasige - elektrische Maschinen ist eine Konstruktion bekannt, bei welcher die elektrische Maschine ein erstes Statorelement und einen mit einer Rotorwelle verbundenen Rotor aufweist, wobei die Rotorwelle in Lagern drehbar gelagert ist, so dass der Rotor um eine Rotationsachse rotierbar ist. Bei dieser Konstruktion ist kein zweites Statorelement vorhanden. Der Rotor trägt eine Anzahl von tangential zur Rotationsachse magnetisierten Permanentmagneten, wobei tangential um die Rotationsachse herum gesehen zwischen den Permanentmagneten Flussführungselemente angeordnet sind, mittels derer von den Permanentmagneten ausgehende Magnetfelder radial auf das erste Statorelement zu umgelenkt werden.

Für mehrphasige - insbesondere dreiphasige - elektrische Maschinen ist weiterhin eine Konstruktion bekannt, bei welcher die elektrische Maschine ein erstes Statorelement und einen mit einer Rotorwelle verbundenen Rotor aufweist, wobei die Rotorwelle in Lagern drehbar gelagert ist, so dass der Rotor um eine Rotationsachse rotierbar ist. Auch bei dieser Konstruktion ist kein zweites Statorelement vorhanden. Das erste Statorelement trägt eine Anzahl von tangential zur Rotationsachse magnetisierten Permanentmagneten. Der Rotor weist ein um die Rotationsachse umlaufendes Rotorjoch auf, von dem ausgehend sich weichmagnetische Finger auf das erste Statorelement zu erstrecken. Die weichmagnetischen Finger sind somit über das Rotorjoch untereinander verbunden.

Die Aufgabe der vorliegenden Erfindung besteht darin, eine mehrphasige elektrische Maschine zu schaffen, die permanent magnetisch erregt ist und einen einfachen Aufbau aufweist.

Die Aufgabe wird durch eine elektrische Maschine mit den Merkmalen des Anspruchs 1 gelöst. Vorteilhafte Ausgestaltungen der elektrischen Maschine sind Gegenstand der abhängigen Ansprüche 2 bis 10. Anspruch 11 nennt bevorzugte Verwendungen der erfindungsgemäßen elektrischen Maschine.

Erfindungsgemäß wird eine elektrische Maschine der eingangs genannten Art dadurch weitergebildet,
- dass das zweite Statorelement eine Anzahl von Permanentmagneten trägt, die Magnetfelder generieren, die um die Rotationsachse herum gesehen alternierend auf den Rotor zu und von dem Rotor weg gerichtet sind, und
- dass der Rotor eine Anzahl an weichmagnetischen Segmenten aufweist, die tangential um die Rotationsachse herum gesehen gleichmäßig verteilt sind und zwischen denen sich unmagnetische und elektrisch schlecht oder nicht leitende Bereiche befinden.

Es ist möglich, dass das zweite Statorelement weiter von der Rotationsachse entfernt angeordnet ist als das erste Statorelement. Vorzugsweise hingegen ist es umgekehrt.

Es ist möglich, dass um die Rotationsachse herum gesehen die Permanentmagnete selbst alternierend radial magnetisiert sind. Alternativ ist es möglich, dass um die Rotationsachse herum gesehen die Permanentmagnete alternierend tangential zur Rotationsachse magnetisiert sind und dass tangential um die Rotationsachse herum gesehen zwischen den Permanentmagneten Flussführungselemente angeordnet sind, mittels derer von den Permanentmagneten ausgehende Magnetfelder radial auf den Rotor zu umgelenkt werden.

Die Permanentmagnete können nach Bedarf ausgebildet sein. Insbesondere bei einer tangentialen Magnetisierung der Permanentmagnete handelt es sich bei den Permanentmagneten vorzugsweise um Ferrite.

Der Rotor ist mit der Rotorwelle vorzugsweise über ein Verbindungselement verbunden, von dem ausgehend sich die weichmagnetischen Segmente parallel zur Rotationsachse erstrecken. Das Verbindungselement kann insbesondere als Abschlussscheibe oder als Abschlussflansch ausgebildet sein.

Die weichmagnetischen Segmente, die zwischen den Permanentmagneten angeordnet sind, sind vorzugsweise geblecht.

In einer bevorzugten Ausgestaltung der erfindungsgemäßen elektrischen Maschine befindet sich in den unmagnetischen und elektrisch schlecht oder nicht leitenden Bereichen Luft oder Kunststoff.

Aufgrund der erfindungsgemäßen Ausgestaltung der elektrischen Maschine ist es nicht erforderlich, dass der Rotor zwischen den weichmagnetischen Segmenten und dem zweiten Statorelement ein um die Rotationsachse umlaufendes Rotorjoch aufweist, über das die weichmagnetischen Segmente untereinander verbunden sind. Dadurch kann insbesondere das Rotorträgheitsmoment reduziert werden. Dadurch werden sowohl die Drehmomentdichte als auch das Beschleunigungsvermögen der erfindungsgemäßen elektrischen Maschine maximiert.

Das Statorwicklungssystem weist eine Polpaarzahl auf. Die Permanentmagnete bilden eine Anzahl von Magnetpolpaaren. Die Anzahl an weichmagnetischen Segmenten ist vorzugsweise gleich der Summe oder der Differenz der Polpaarzahl und der Anzahl von Magnetpolpaaren.

Die erfindungsgemäße elektrische Maschine kann nach Bedarf eingesetzt werden. Vorzugsweise wird sie als Servomotor, als Torquemotor, als Generator und/oder Antrieb in Fahrzeugen oder als Windkraftgenerator verwendet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Längsschnitt durch eine elektrische Maschine und
- FIG 2: einen Querschnitt durch die elektrische Maschine von FIG 1.

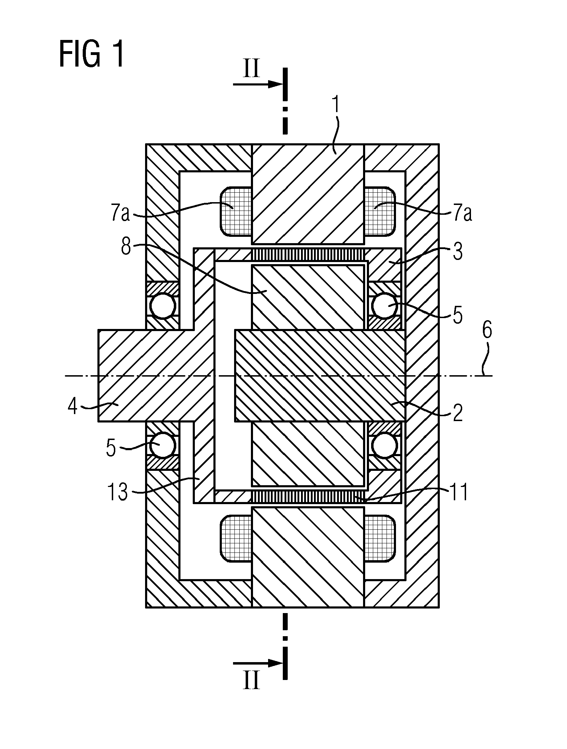

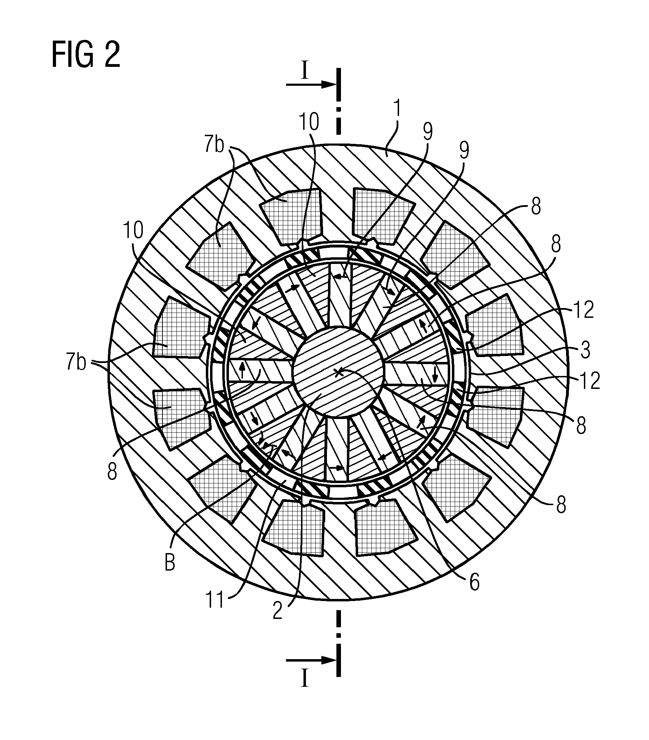

Die FIG 1 und 2 werden nachfolgend gemeinsam erläutert.

Gemäß den FIG 1 und 2 weist eine elektrische Maschine ein erstes Statorelement 1, ein zweites Statorelement 2 und einen Rotor 3 auf. Der Rotor 3 ist mit einer Rotorwelle 4 verbunden. Die Rotorwelle 4 ist in Lagern 5 drehbar gelagert. Die Rotorwelle 4 und mit ihr der Rotor 3 sind dadurch um eine Rotationsachse 6 rotierbar.

Soweit nachfolgend die Begriffe "axial", "radial" und "tangential" verwendet werden, sind sie stets auf die Rotationsachse 6 bezogen. "Axial" ist eine Richtung parallel zur Rotationsachse 6. "Radial" ist eine Richtung orthogonal zur Rotationsachse 6 auf die Rotationsachse 6 zu oder von ihr weg. "Tangential" ist eine Richtung, die sowohl zur Axialrichtung als auch zur Radialrichtung orthogonal ist. Tangential ist also eine Richtung, die in konstantem Radialabstand und bei konstanter Axialposition kreisförmig um die Rotationsachse 6 herum gerichtet ist.

Radial zur Rotationsachse 6 gesehen ist der Rotor 3 zwischen dem ersten und dem zweiten Statorelement 1, 2 angeordnet. Es ist prinzipiell möglich, dass das erste Statorelement 1 näher an der Rotationsachse 6 angeordnet ist als das zweite Statorelement 2. Gemäß den FIG 1 und 2 ist es jedoch umgekehrt. Das erste Statorelement 1 ist also weiter von der Rotationsachse 6 entfernt angeordnet als das zweite Statorelement 2.

Das erste Statorelement 1 trägt ein Statorwicklungssystem. Sichtbar sind in FIG 1 Wicklungsköpfe 7a des Statorwicklungssystems, in FIG 2 Wicklungen 7b des Statorwicklungssystems. Das Statorwicklungssystem ist mehrphasig ausgebildet, gemäß FIG 2 beispielsweise dreiphasig. Das Statorwicklungssystem weist eine Polpaarzahl auf. Die Polpaarzahl weist gemäß FIG 2 (rein beispielhaft) den Wert 4 auf.

Das zweite Statorelement 2 trägt eine Anzahl von Permanentmagneten 8. Die Permanentmagnete 8 können beispielsweise Ferrite sein. Es ist möglich, dass die Permanentmagnete 8 alternierend radial magnetisiert sind. In diesem Fall sind bereits die von den Permanentmagneten 8 ausgehenden Magnetfelder B direkt alternierend radial magnetisiert, d.h. alternierend auf den Rotor 3 zu und vom Rotor 3 weg gerichtet. Gemäß FIG 2 sind die Permanentmagnete 8 jedoch tangential zur Rotationsachse 6 magnetisiert. Dies ist in FIG 2 durch entsprechende Pfeile 9 angedeutet. In diesem Fall sind die von den Permanentmagneten 8 ausgehenden Magnetfelder B zunächst alternierend tangential gerichtet.

Die Permanentmagnete 8 sind tangential um die Rotationsachse 6 herum gesehen gleichmäßig verteilt angeordnet. Die Permanentmagnete 8 bilden eine Anzahl von Magnetpolpaaren. Die Anzahl an Magnetpolpaaren weist gemäß FIG 2 (rein beispielhaft) den Wert 6 auf.

Im Falle der tangentialen Magnetisierung der Permanentmagnete 8 entsprechend der Darstellung in FIG 2 sind tangential um die Rotationsachse 6 herum gesehen zwischen den Permanentmagneten 8 Flussführungselemente 10 angeordnet. Die Flussführungselemente 10 sind - ähnlich wie Tortenstücke - kreissektorförmig ausgebildet. Wenn das zweite Statorelement 2 weiter von der Rotationsachse 6 entfernt wäre als das erste Statorelement 1, wären die Flussführungselemente 10 kreisringsektorförmig ausgebildet. Mittels der Flussführungselemente 10 werden die von den Permanentmagneten 8 ausgehenden, tangential gerichteten Magnetfelder B radial alternierend auf den Rotor 3 zu und von ihm weg umgelenkt.

Der Rotor 3 weist eine Anzahl an weichmagnetischen Segmenten 11 auf. Die weichmagnetischen Segmente 11 sind tangential um die Rotationsachse 6 herum gesehen gleichmäßig verteilt angeordnet. Die weichmagnetischen Segmente 11 sind gemäß FIG 1 vorzugsweise geblecht. Die Anzahl an weichmagnetischen Segmenten 11 weist gemäß FIG 2 den Wert 10 auf. Es gilt also die Beziehung, dass die Anzahl an weichmagnetischen Segmenten 11 gleich der Summe der Polpaarzahl und der Anzahl von Magnetpolpaaren ist. Alternativ könnte sie gleich der Differenz der Polpaarzahl und der Anzahl von Magnetpolpaaren sein.

Zwischen den weichmagnetischen Segmenten 11 befinden sich unmagnetische und elektrisch schlecht oder nicht leitende Bereiche 12. In den Bereichen 12 kann sich beispielsweise Luft befinden. Alternativ kann sich in den Bereichen 12 beispielsweise Kunststoff befinden. Auch andere Materialien sind denkbar. Entscheidend ist, dass die Bereiche 12 unmagnetisch sind und dass ein elektrischer Stromfluss von einem der Bereiche 12 zu einem anderen der Bereiche 12 nicht möglich ist.

Wie aus FIG 2 deutlich erkennbar ist, weist der Rotor 3 zwischen den weichmagnetischen Segmenten 11 und dem zweiten Statorelement 2 kein um die Rotationsachse 6 um laufendes Rotorjoch auf, über das die weichmagnetischen Segmente 12 (mechanisch und magnetisch) untereinander verbunden sind. Die Verbindung der weichmagnetischen Segmente 12 miteinander (so dass diese zusammen den Rotor 3 bilden) erfolgt stattdessen über ein Verbindungselement 13, über das der Rotor 3 mit der Rotorwelle 4 verbunden ist. Insbesondere erstrecken sich die weichmagnetischen Segmente 11 ausgehend von dem Verbindungselement 13 axial zur Rotationsachse 6. Das Verbindungselement 13 kann beispielsweise als Abschlussscheibe oder als Abschlussflansch ausgebildet sein.

Die erfindungsgemäße elektrische Maschine kann nach Bedarf eingesetzt und verwendet werden, beispielsweise als Servomotor, als Torquemotor, als Generator und/oder Antrieb in Fahrzeugen oder als Windkraftgenerator.

Die erfindungsgemäße elektrische Maschine weist viele Vorteile auf. Durch den Einsatz von Ferriten als Permanentmagneten 8 werden geringe Herstellungskosten ermöglicht. Durch die Positionierung der Permanentmagnete 8 im Stator wird der Aufwand für die Befestigung der Permanentmagnete 8 minimiert. Insbesondere wirken auf die Permanentmagnete 8 keine dynamischen, durch die Bewegung des Rotors 3 hervorgerufenen mechanischen Belastungen. Aufgrund der Teilung des Stators in das erste Statorelement 1 und das zweite Statorelement 2 wird die für die Wicklungen 7b zur Verfügung stehende Nutfläche optimiert. Aufgrund des Umstands, dass ein Rotorjoch nicht erforderlich ist, wird das Trägheitsmoment des Rotors 3 minimiert. Dadurch werden sowohl die Drehmomentdichte als auch das Beschleunigungsvermögen des Rotors 3 optimiert.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Elektrische Maschine,
- wobei die elektrische Maschine ein erstes Statorelement (1), ein zweites Statorelement (2) und einen mit einer Rotorwelle (4) verbundenen Rotor (3) aufweist,
- wobei die Rotorwelle (4) in Lagern (5) drehbar gelagert ist, so dass der Rotor (3) um eine Rotationsachse (6) rotierbar ist,
- wobei der Rotor (3) radial zur Rotationsachse (6) gesehen zwischen dem ersten und dem zweiten Statorelement (1, 2) angeordnet ist,
- wobei das erste Statorelement (1) ein Statorwicklungssystem trägt und das zweite Statorelement (2) eine Anzahl von Permanentmagneten (8) trägt, die Magnetfelder (B) generieren, die um die Rotationsachse (6) herum gesehen alternierend auf den Rotor (3) zu und von dem Rotor (3) weg gerichtet sind, und
- wobei der Rotor (3) eine Anzahl an weichmagnetischen Segmenten (11) aufweist, die tangential um die Rotationsachse (6) herum gesehen gleichmäßig verteilt sind und zwischen denen sich unmagnetische und elektrisch schlecht oder nicht leitende Bereiche (12) befinden.

2. Elektrische Maschine nach Anspruch 1, **dadurch gekennzeichnet , dass** das erste Statorelement (1) weiter von der Rotationsachse (6) entfernt angeordnet ist als das zweite Statorelement (2).

3. Elektrische Maschine nach Anspruch 1 oder 2, **da** - **durch gekennzeichnet** , dass um die Rotationsachse (6) herum gesehen die Permanentmagnete (8) alternierend radial magnetisiert sind.

4. Elektrische Maschine nach Anspruch 1 oder 2, **dadurch gekennzeichnet, dass** um die Rotationsachse (6) herum gesehen die Permanentmagnete (8) alternierend tangential zur Rotationsachse (6) magnetisiert sind und dass tangential um die Rotationsachse (6) herum gesehen zwischen den Permanentmagneten (8) Flussführungselemente (10) angeordnet sind, mittels derer von den Permanentmagneten (8) ausgehende Magnetfelder (B) radial auf den Rotor (3) zu und vom Rotor (3) weg umgelenkt werden.

5. Elektrische Maschine nach einem der obigen Ansprüche, **dadurch gekennzeichnet , dass** die Permanentmagnete (8) Ferrite sind.

6. Elektrische Maschine nach einem der obigen Ansprüche, **dadurch gekennzeichnet , dass** der Rotor (3) mit der Rotorwelle (4) über ein Verbindungselement (13) verbunden ist, von dem ausgehend sich die weichmagnetischen Segmente (11) parallel zur Rotationsachse (6) erstrecken, und dass das Verbindungselement (13) als Abschlussscheibe oder als Abschlussflansch ausgebildet ist.

7. Elektrische Maschine nach einem der obigen Ansprüche, **dadurch gekennzeichnet , dass** die weichmagnetischen Segmente (11) geblecht sind.

8. Elektrische Maschine nach einem der obigen Ansprüche, **dadurch gekennzeichnet , dass** sich in den unmagnetischen und elektrisch schlecht oder nicht leitenden Bereichen (12) Luft oder Kunststoff befindet.

9. Elektrische Maschine nach einem der obigen Ansprüche, **dadurch gekennzeichnet , dass** der Rotor (3) zwischen den weichmagnetischen Segmenten (11) und dem zweiten Statorelement (2) kein um die Rotationsachse (6) umlaufendes Rotorjoch aufweist, über das die weichmagnetischen Segmente (11) untereinander verbunden sind.

10. Elektrische Maschine nach einem der obigen Ansprüche, **dadurch gekennzeichnet , dass** das Statorwicklungssystem eine Polpaarzahl aufweist, dass die Permanentmagnete (8) eine Anzahl von Magnetpolpaaren bildet und dass die Anzahl an weichmagnetischen Segmenten (11) gleich der Summe oder der Differenz der Polpaarzahl und der Anzahl von Magnetpolpaaren ist.

11. Elektrische Maschine nach einem der obigen Ansprüche, **dadurch gekennzeichnet , dass** sie als Servomotor, als Torquemotor, als Generator und/oder Antrieb in Fahrzeugen oder als Windkraftgenerator verwendet wird.
